Europäisches Patentamt

European Patent Office

Office européen des brevets

(19)

(11) Numéro de publication : **0 225 269 B1**

## (12) FASCICULE DE BREVET EUROPEEN

(45) Date de publication du fascicule du brevet :
**06.02.91 Bulletin 91/06**

(51) Int. Cl.⁵ : **H04L 27/20, H04L 27/00**

(21) Numéro de dépôt : **86460017.6**

(22) Date de dépôt : **12.09.86**

(54) **Modulateur par déplacement de phase MAQ 22n et, en particulier, modulateur MDP4.**

(30) Priorité : **28.10.85 FR 8516088**

(43) Date de publication de la demande :
**10.06.87 Bulletin 87/24**

(45) Mention de la délivrance du brevet :
**06.02.91 Bulletin 91/06**

(84) Etats contractants désignés :
**DE GB**

(56) Documents cités :
**EP-A- 0 031 762
DE-C- 2 048 057
FR-A- 2 469 062
US-A- 3 805 191
US-A- 4 206 423**

(73) Titulaire : **Verdot, Georges
32, rue de l'Aérodrome
F-22300 Lannion (FR)**

(72) Inventeur : **Verdot, Georges
32, rue de l'Aérodrome
F-22300 Lannion (FR)**

(74) Mandataire : **Le Guen, Louis François
CABINET Louis LE GUEN 38, rue Levavasseur
B.P. 91
F-35802 Dinard Cédex (FR)**

## Description

La présente invention concerne un modulateur par déplacement de phase à quatre états ou modulateur MDP4 et, plus généralement, des modulateurs pour modulation d'amplitude à deux porteuses en quadrature à grand nombre d'états ou modulation MAQ $2^{2n}$, dans lesquels sont utilisés des modulateurs MDP4 suivant l'invention.

On rappelle qu'un signal à modulation par déplacement de phase à quatre états ou signal MDP4 est formé d'une porteuse sinusoïdale de fréquence fo qui prend un état de phase parmi quatre états de phase possibles : 0°, 90°, 180° et 270°, en fonction du signal numérique modulant.

Par ailleurs, les systèmes de transmission numérique à modulation MAQ $2^{2n}$, où n est grand, présentent un grand intérêt. Or, dans les systèmes de modulation de type MAQ $2^{2n}$ tels que MAQ 64 ou MAQ 256, qui sont, par exemple, décrits dans les documents suivants :

— "Design and Application of the RD-4A and RD-6A 64 QAM Digital Radio Systems" par J.D. McNicol et al., paru dans ICC'84 Conf. Rec. Vol. 2, pp. 646-652,

— "64 QAM Digital Radio Transmission System. Integration and Performance" par J.A. Crosset and P.R. Hartmann, paru dans ICC'84 Conf. Rec. Vol. 2, p. 636-641,

— "Design and Performance of 6 GHz 135 Mb/s Radio System with 64 QAM" par Y. Ito et al., paru dans ICC'84 Conf. Rec. Vol. 2, pp. 632-635,

— "256 QAM Modem for High Capacity Digital Radio Systems" par Y. Daido et al., paru dans Globecom'84, Vol. 2, pp. 16.8.1-16.8.5,

la fonction modulation est réalisée au moyen de modulateurs en anneau, c'est-à-dire de composants analogiques, qui doivent être de grande qualité, donc chers. L'utilisation de composants analogiques, comme composant de base, dans les modulateurs ne permet pas leur intégration, si bien que les modulateurs occupent un gros volume.

Le principe est également connu de réaliser des modulations MAQ $2^{2n}$ à partir de modulations élémentaires réalisées dans des modulateurs MDP4 dont les signaux de sortie subissent des atténuations sélectives avant d'être sommés, mais seuls sont alors utilisables des modulateurs MDP4 de grande précision.

D'autre part, on connaît d'après le document FR-A-2 469 062, une réalisation d'un modulateur MDP4 dans la construction duquel n'entrent pratiquement que des circuits logiques. Ce modulateur MDP4 peut donc être fabriqué sous forme intégrée, est d'un prix de revient bas, a une bonne fiabilité et ne nécessite que peu de réglage. En pratique, il est pratiquement indépendant aussi bien de la fréquence porteuse que du débit numérique. En ce qui concerne la précision sur les phases des différents états, elle atteint le degré, ce qui est tout à fait suffisant quand le modulateur MDP4 est utilisé seul, mais qui demeure insuffisant quand on somme plusieurs signaux pour obtenir une modulation MAQ d'ordre élevé. On rappelle encore que, dans ce modulateur MDP4 connu, le réglage fin des phases est effectué en agissant sur les condensateurs de circuits RC, les condensateurs étant en parallèle sur les fils transmettant les porteuses déphasées.

Dans le document US-A-4 206 423, il est également décrit un modulateur MDP4 qui comprend un générateur de signaux rectangulaires haute fréquence délivrant le signal à fréquence porteuse avec quatre phases différentes, respectivement décalées de 90°, et un sélecteur de phase à quatre entrées de porteuse et quatre entrées de signaux modulants et quatre sorties de porteuses déphasées, où chaque entrée de signal modulant est reliée à l'entrée de commande d'un commutateur monté entre une entrée de porteuse et une sortie de porteuse, les quatre sorties du sélecteur étant reliées aux quatre entrées d'une porte OU.

Un objet de la présente invention consiste à prévoir un modulateur MDP4 dans la structure physique duquel n'entrent que des circuits logiques intégrables et dont la précision sur les phases soit meilleure qu'un dixième de degré. Avec le modulateur de l'invention, il devient donc possible de réaliser des modulations MAQ d'ordre élevé avec intégration des circuits.

L'objet de l'invention mentionné ci-dessus est atteint par la mise en oeuvre des combinaisons de moyens définies dans la revendication principale et ses revendications dépendantes.

La description suivante d'exemples de réalisation suivant l'invention sera faite en relation avec les dessins joints, parmi lesquels :

la Fig. 1 est le schéma d'un modulateur MDP4 suivant l'invention,

la Fig. 2 est le bloc-diagramme d'un modulateur MAQ $2^{2n}$ suivant l'invention, et

les Figs. 3a à 3h sont des diagrammes temporels illustrant le fonctionnement du modulateur de la Fig. 1.

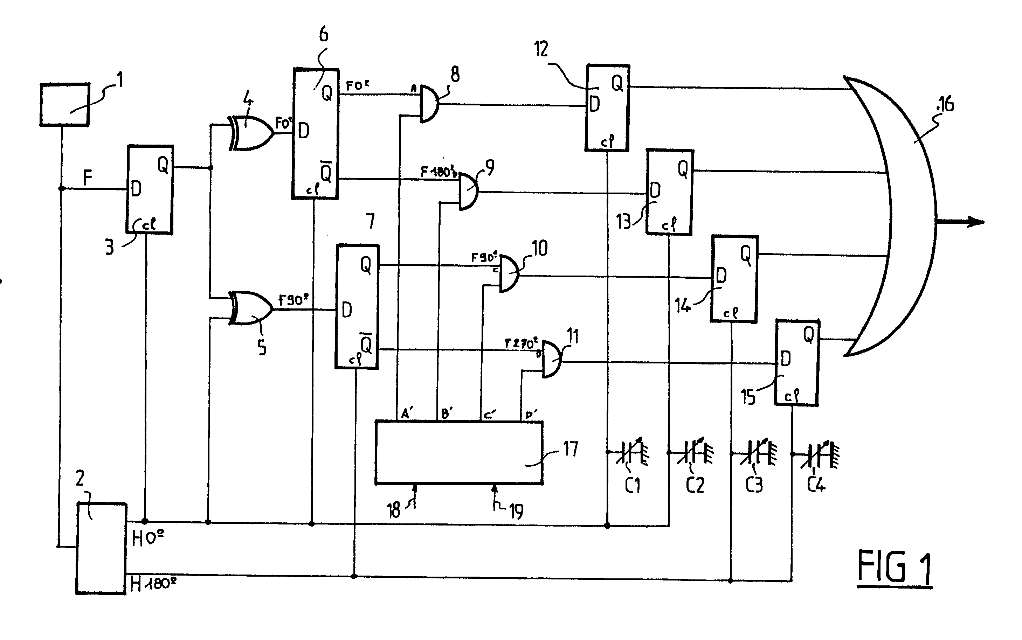

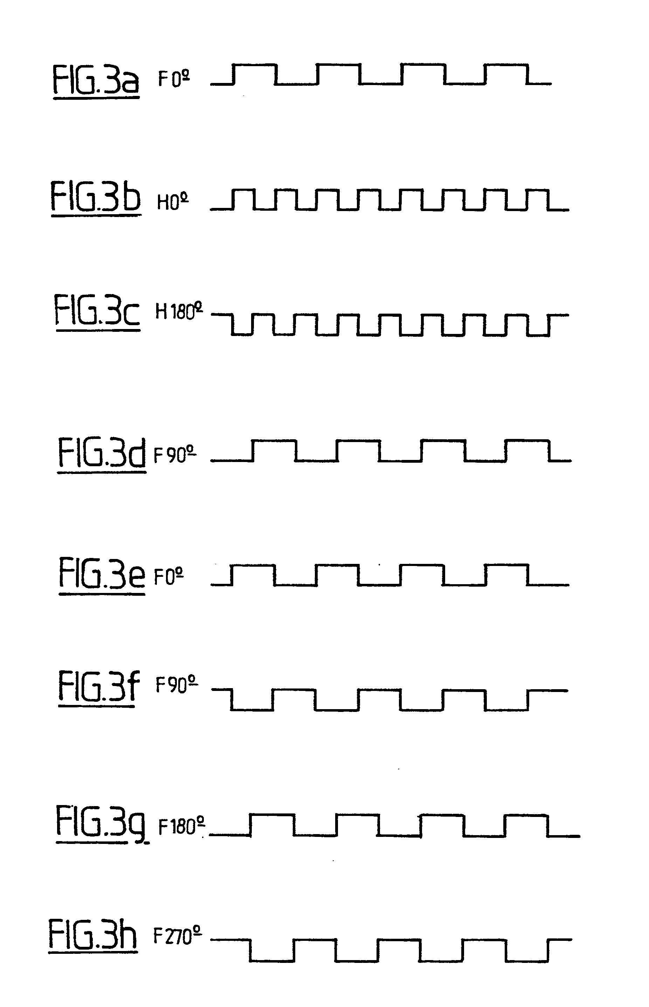

Le modulateur MDP4 de la Fig. 1 comprend une source 1 qui délivre un signal F de fréquence fo. La sortie de la source 1 est reliée, d'une part, à l'entrée d'un doubleur de fréquence 2 et, d'autre part, à l'entrée de données D d'une bascule 3. Le doubleur de fréquence 2 a deux sorties qui délivrent respectivement deux signaux $H^{0°}$ et $H^{180°}$, en opposition de phase, tous deux de fréquence 2fo. Le signal F est représenté à la Fig. 3a, le signal $H^{0°}$ à la Fig. 3b et le signal $H^{180°}$ à la Fig. 3c. On remarquera que les passages par zéro de ces signaux coïncident.

La bascule 3 a son entrée d'horloge cl reliée à la sortie $H^{0°}$. Sa sortie Q délivre le signal F, remis en forme, et est reliée, d'une part, à l'entrée unique d'une première porte OU-exclusif 4 et à la première entrée d'une seconde porte OU-exclusif 5 à deux entrées. La seconde entrée de la porte 5 est reliée à la sortie H⁰°. En pratique, la porte 4 délivre un signal F⁰° et la porte 5 un signal F⁹⁰°, en quadrature de phase avec F⁰°. La fonction de la porte 4 est simplement d'établir un retard égal à celui de la porte 5 qui effectue le déphasage de F en F⁹⁰°.

La sortie de la porte 4 est reliée à l'entrée de données d'une bascule 6 tandis que la sortie de la porte 5 est reliée à l'entrée de données d'une bascule 7. Les entrées d'horloge cl des bascules 6 et 7 sont respectivement reliées aux sorties H⁰° et H¹⁸⁰°. L'ensemble des éléments 1 à 7 forme un générateur de porteuses déphasées de 90° dont les sorties Q et $\overline{Q}$ des bascules 6 et 7 constituent respectivement les sorties F⁰°, F⁹⁰°, F¹⁸⁰° et F²⁷⁰°.

La sortie Q de la bascule 6 est reliée à la première entrée A d'une porte ET 8 tandis que la sortie $\overline{Q}$ est reliée à la première entrée B d'une porte ET 9. La sortie Q de la bascule 7 est reliée à la première entrée C d'une porte ET 10 tandis que la sortie $\overline{Q}$ est reliée à la première entrée D d'une porte ET 11. Les sorties des portes ET 8 à 11 sont respectivement reliées aux entrées de données de quatre bascules 12 à 15. Les sorties Q des bascules 12 à 15 sont reliées aux entrées d'une porte OU 16 dont la sortie constitue la sortie du modulateur.

Les entrées d'horloge cl des bascules 12 et 13 sont reliées à la sortie H⁰° tandis que les entrées d'horloge cl des bascules 14 et 15 sont reliées à la sortie H¹⁸⁰°. De plus, entre les entrées d'horloge des bascules 12 à 15 et la masse, sont respectivement prévus des condensateurs ajustables C1 à C4. Les condensateurs C1 à C4 permettent d'ajuster, en apportant un retard, les instants d'application des fronts des signaux d'horloge H⁰° et H¹⁸⁰°.

Le modulateur est complété par un décodeur 17 dont les quatre sorties A', B', C' et D' sont respectivement reliées aux secondes entrées des portes 8 à 11. Le décodeur 17 comporte une entrée à deux fils 18 et 19 auxquels sont appliqués les éléments binaires ou bits du signal modulant. L'ensemble des éléments 8 à 11 et 17 forme un sélecteur de phase.

Le fonctionnement du modulateur de la Fig. 1 est le suivant. Le signal F de la source 1 appliqué à la bascule 3 a une fréquence égale à fo, où fo est la fréquence de la porteuse, qui peut, par exemple, être égale à 140 MHz. La sortie Q de la bascule 3 délivre un signal F⁰° remis en phase par le signal H⁰°. La porte 4 délivre le même signal F⁰° tandis que la porte OU-exclusif 5 délivre un signal en quadrature, soit F⁹⁰°. Les Figs. 3e à 3h représentent respectivement les signaux F⁰°, F⁹⁰°, F¹⁸⁰° et F²⁷⁰°, délivrés par les sorties Q de 6, $\overline{Q}$ de 6, Q de 7 et $\overline{Q}$ de 7. On notera que les signaux des Figs. 3e, 3g, 3f et 3h, observés dans cet ordre sont chacun décalés de 90° par rapport au précédent. Ainsi, on dispose aux sorties des bascules 6 et 7 des quatre phases du signal F. Ces signaux déphasés sont appliqués aux premières entrées des portes ET 8 à 11, respectivement.

Par ailleurs, à chaque symbole quaternaire 00, 01, 10 ou 11 constitué par la paire de bits appliquée au rythme du train de bits, par exemple d'une fréquence de l'ordre de quelques dizaines de MHz aux fils d'entrée 18 et 19 du décodeur 17, correspond une des sorties A' à D' activée pendant un temps d'horloge. Pendant la période d'un symbole, suivant la valeur de celui-ci, une sortie du décodeur étant activée, une des portes 8 à 11 est ouverte et une seule, les trois autres étant inhibées.

Le signal délivré par la porte ET sélectée par le décodeur 17 est transmis par la bascule qui lui est associée parmi les bascules 12 à 15. Dans ces bascules, les transferts sont effectués suivant les signaux H⁰° ou H¹⁸⁰° afin de respecter les phases. Enfin, la porte OU 16 réunit les signaux de sortie des bascules 12 à 15, dont une seule est active à la fois.

Dans le modulateur décrit dans le document FR-A-2 469 062 déjà mentionné, il faut utiliser une fréquence égale à quatre fois la fréquence porteuse. Dans le modulateur de l'invention, la fréquence 2fo, double de la fréquence porteuse fo, suffit, ce qui est d'autant plus avantageux que la fréquence porteuse est plus élevée.

Alors que, dans le modulateur connu, les condensateurs de réglage fin sont directement en parallèle sur les fils transmettant la porteuse, les condensateurs C1 à C4 sont, dans la présente invention, en parallèle sur les fils d'horloge des bascules 12 à 15. Dans le modulateur connu, la phase à la sortie de la porte ET est réglée, mais il existe une distorsion de la forme de la porteuse à l'entrée de la porte OU qui réunit les signaux. Les signaux appliqués à la porte OU n'ont donc pas tous la même forme pour les quatre phases possibles. Ainsi, après filtrage, la composante à la fréquence porteuse du signal de sortie de la porte OU n'a pas la même amplitude pour chaque phase possible.

Dans le modulateur de l'invention, le réglage s'effectue sur le signal d'horloge des bascules. Ce sont donc les bascules qui déterminent les formes des signaux appliqués à la porte OU 16. Or, dans un même circuit intégré, les bascules sont pratiquement identiques et les formes de leurs signaux de sortie sont identiques. Par ailleurs, ces formes sont indépendantes des réglages des condensateurs C1 à C4.

Il en résulte que les phases peuvent être réglées avec une précision meilleure que 0,1° alors que, dans le modulateur connu, la précision n'était que 1°. Les amplitudes sont constantes au lieu de varier de 0,2 dB.

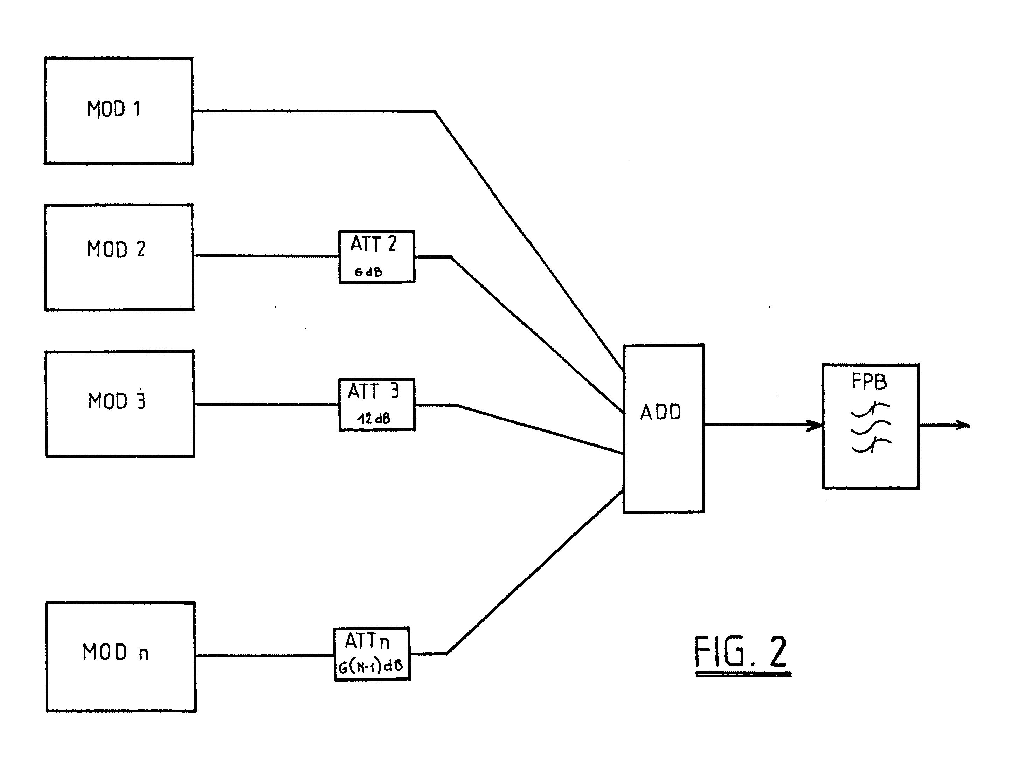

Ainsi le modulateur de l'invention est utilisable pour engendrer des modulations MAQ16, MAQ64 ou des modulations MAQ d'ordre encore plus élevé. Le modulateur de la Fig. 2 comprend n modulateurs élémentaire MOD1 à MODn, qui sont chacun identiques au modulateur MDP4 et la Fig. 1. Les sorties des modulateurs MOD2 à MODn sont respectivement reliées aux entrées de (n-1) atténuateurs ATT2, ATT3, ..., ATTn dont les coefficients d'atténuation sont respectivement 6dB, 12dB, ..., 6(n-1) dB. La sortie du modulateur MOD1 et les sorties des atténuateurs ATT2 à ATTn sont respectivement reliées aux entrées d'un additionneur ADD dont la sortie délivre le signal à modulation MAQ $2^{2n}$.

La sortie de l'additionneur ADD est reliée à un filtre passe bande FPB centré sur la fréquence fo de la porteuse et dont la largeur de bande est fonction de la fréquence rythme des trains binaires modulants.

Le signal de sortie de l'additioneur ADD est alors semblable au signal obtenu par des moyens classiques.

## Revendications

1. Modulateur par déplacement de phase à quatre états comportant un générateur de signaux rectangulaires haute fréquence (1 à 7) pourvu de quatre sorties délivrant le signal à fréquence porteuse avec quatre phases différentes, respectivement décalées de 90° ($F^{0°}$, $F^{90°}$, $F^{180°}$, $F^{270°}$), ledit générateur comportant une source (1) fournissant ledit signal haute fréquence et un doubleur de fréquence, un sélecteur de phase ayant quatre entrées de porteuse ($F^{0°}$, $F^{90°}$, $F^{180°}$, $F^{270°}$) respectivement reliées aux quatre sorties du générateur, quatre entrées (A', B', C', D') de signaux modulants et quatre sorties de porteuses déphasées, chaque entrée de signal modulant étant reliée à l'entrée de commande d'un commutateur (8, 9, 10, 11) monté entre une entrée de porteuse et une sortie de porteuse, caractérisé en ce que les quatre sorties du sélecteur sont respectivement reliées aux entrées de données de quatre bascules (12, 13, 14, 15), type D, dont les sorties Q sont reliées aux quatre entrées d'une porte OU (16), et en ce que ledit doubleur de fréquence (2) a son entrée reliée à la sortie de ladite source et comporte deux sorties en opposition de phase ($H^{0°}$, $H^{180°}$), les entrées d'horloge des premières et secondes bascules (12, 13) étant reliées à la première sortie du doubleur de fréquence (2) et les entrées d'horloge des troisième et quatrième bascules (14, 15) étant reliées à la seconde sortie du doubleur de fréquence (2).

2. Modulateur suivant la revendication 1, caractérisé en ce qu'entre les fils d'entrée d'horloge des quatre bascules (12, 13, 14, 15) et la masse, sont prévus des condensateurs (C1, C2, C3, C4) de circuits RC.

3. Modulateur suivant la revendication 1 ou 2, caractérisé en ce que le générateur de signaux rectangulaires comprend la source de signaux rectangulaires haute fréquence (1) dont la sortie est reliée, d'une part, à l'entrée de données d'une cinquième bascule (6) et, d'autre part, à la première entrée d'une porte OU-exclusif (5) dont la sortie est reliée à l'entrée de données d'une sixième bascule (7), la seconde entrée de la porte OU-exclusif (5) étant reliée à la première sortie ($H^{0°}$) du doubleur de fréquence (2), les entrées d'horloge des cinquième et sixième bascules (6, 7) étant respectivement reliées aux première et seconde sortie du doubleur de fréquence (2), les sorties Q et Q̄ des cinquième et sixième bascules (6, 7) constituant les quatre sorties du générateur.

4. Modulateur MAQ $2^{2n}$ comprenant n modulateurs MDP4 (MOD1 à MODn) dont les sorties sont respectivement reliées aux entrées de n atténuateurs (ATT1 à ATTn) ayant respectivement des coefficients d'atténuation de 6 (n-1), avec n variant de 1 à n, les sorties des atténuateurs étant reliées aux n entrées d'un sommateur (ADD), caractérisé en ce que les modulateurs MDP4 étant des modulateurs suivant l'une des revendications 1 à 3.

## Ansprüche

1. Modulator, bei dem vier Phasenverschiebungszustände vorgesehen sind (4-PSK-Modulator), der einen Hochfrequenz-Rechtecksignalgenerator (1 bis 7) mit vier Ausgängen aufweist, die das trägerfrequente Signal, jeweils um 90° versetzt, mit vier verschiedenen Phasen ($F^{0°}$, $F^{90°}$ $F^{180°}$, $F^{270°}$) abgeben, wobei der Generator eine Quelle (1), die das Hochfrequenz-Signal liefert, aufweist sowie einen Frequenzverdoppler, einen Phasenselektor mit vier Trägerfrequenz-Eingängen ($F^{0°}$, $F^{90°}$, $F^{180°}$, $F^{270°}$) die mit den entsprechenden vier Ausgängen des Generators verbunden sind, vier Eingänge (A', B', C', D') für Modulationssignale und vier Ausgänge für phasenverschobene Trägerfrequenzen, wobei jeder Modulationssignal-Eingang mit dem Steuereingang eines zwischen einem Trägerfrequenz-Eingang und einem Trägerfrequenz-Ausgang angeordneten Kommutators (8, 9, 10, 11) verbunden ist, **dadurch gekennzeichnet**, daß die vier Selektorausgänge verbunden sind mit den entsprechenden Dateneingängen von vier D-Typ-Flip-Flops (12, 13, 14, 15), deren Q-Ausgänge mit den vier Eingängen eines ODER-Gatters (16) verbunden sind, und daß der Frequenzverdoppler (2) einen mit dem Ausgang der Quelle verbundenen Eingang und zwei gegenphasige ($H^{0°}$, $H^{180°}$) Ausgänge aufweist, wobei der Takteingang des ersten und der des zweiten Flip-Flops (12, 13) mit dem ersten Ausgang des Frequenz-verdopplers (2) und der Takteingang des dritten und der des vierten Flip-Flops (14, 15) mit dem zweiten Ausgang des Frequenzverdopplers (2) verbunden sind.

2. Modulator nach Anspruch 1, **dadurch gekennzeichnet**, daß zwischen den Takteingangleitungen der vier Flip-Flops (12, 13, 14, 15) und der Masse Kondensatoren (C1, C2, C3, C4) von RC-Schualtkreisen vorgesehen sind.

3. Modulator nach Anspruch 1 oder 2, **dadurch gekenneichnet,** daß der Rechtecksignalgenerator die Hochfrequenz-Rechtecksignalquelle (1) aufweist, deren Ausgang einerseits mit dem Dateneingang eines fünften Flip-Flops (6) und andererseits mit dem ersten Eingang eines EXKLUSIV-ODER-Gatters (5) verbunden ist, dessen Ausgang mit dem Dateneingang eines sechstem Flip-Flops (7) verbunden ist, wobei der zweite Eingang des EXKLUSIV-ODER- Gatters (5) mit dem ersten Ausgang (H⁰°) des Fre- quenzverdopplers (2) verbunden ist und der Takkteingamg des fünften und der des sechsten Flip- Flops (6, 7) mit dem ersten bzw. mit dem zweiten Ausgang des Frequenzverdopplers (2) verbunden sind und die Ausgänge Q und $\overline{Q}$ des fünften und des sechsten Flip-Flops (6, 7) die vier Ausgänge des Genera- tors bilden.

4. $2^{2n}$-QAM-Modulator, der n 4-PSK-Modulatoren (MOD1 bis MODn) aufweist, deren Ausgänge mit den entsprechenden Eingängen von n Dämpfungsgliedern (ATT1 bis ATTn) verbundem sind, die jeweils Abschwächungskoeffizienten von 6(n-1) aufweisen, wobei n von 1 bis n variiert und die Ausgänge der Dämpfungsglieder mit den n Eingängen eines Summiergliedes (ADD) verbunden sind, **dadurch gekennzeichnet,** daß die 4-PSK-Modulatoren Modulatoren nach einem der Ansprüche 1 bis 3 sind.

## Claims

1. A modulator by displacement of phase with four conditions comprising a generator of high frequency rectangular signals (1 to 7) provided with four outputs supplying the carrier frequency signal with four different phases respectively displaced by 90°(F⁰°, F⁹⁰°, F¹⁸⁰°, F²⁷⁰°) the said generator comprising a source (1) providing the high frequency signal and a frequency doubler, a phase selector having four carrier inputs (F⁰°, F⁹⁰°, F¹⁸⁰°, F²⁷⁰°) respectively connected to the four outputs of the generator, four inputs (A', B', C', D') of modulating signals and four outputs of out of phase carriers, each modulating signal input being connected to the control input of a commutator (8, 9, 10, 11) mounted between a carrier input and a carrier output, characterised in that the four outputs of the selector are respectively connected to the data inputs of four flip-flops (12, 13, 14, 15) type D the Q outputs of which are connected to the four inputs of an OR gate (16) and in that the said frequency doubler (2) has its input connected to the output of the said source and comprises two outputs in phase opposition (H⁰°, H¹⁸⁰°), the clock inputs of the first and second flip-flop (12, 13) being connected to the first output of the frequency doubler (2) and the clock inputs of the third and fourth flip-flops (14, 15) being connected to the second output of the frequency doubler (2).

2. A modulator according to claim 1, characterised in that between the clock input wires of the four flip-flops (12, 13, 14, 15) and the earth there are provided condensers (C1, C2, C3, C4) of RC circuits.

3. A modulator according to claim 1 or 2, characterised in that the generator of rectangular signals comprises the high frequency source of rectangular signals (1) the output of which is connected, on the one hand, to the data input of a fifth flip-flop (6) and on the other hand to the first input of an OR-exclusive gate (5) the output of which is connected to the data input of a sixth flip-flop (7), the second input of the OR- exclusive gate (5) being connected to the first output (110°) of the freqency doubler (2), the clock inputs of the fifth and sixth flip-flop (6, 7) being respectively connected to the first and second output of the frequency doubler (2), the outputs Q and $\overline{Q}$ of the fifth and sixth flip-flops (6, 7) constituting the four outputs of the generator.

4. An MAQ $2^{2n}$ modulator comprising n MDP4 (MOD1 to MODn) modulators the outputs of which are respectively connected to the inputs of n attenuators (ATT1 to ATTn) having respectively coefficients of attenuation of 6(n-1) with n varying from 1 to n, the outputs of the attenuators being connected to the n inputs of an adder (ADD), characterised in that the MDP4 modulators being modulators according to one of the claims 1 to 3.

FIG 1

FIG. 2

EP 0 225 269 B1

FIG.3a F0º

FIG.3b H0º

FIG.3c H180º

FIG.3d F90º

FIG.3e F0º

FIG.3f F90º

FIG.3g F180º

FIG.3h F270º